# EUROPÄISCHE PATENTSCHRIFT

(11) **EP 2 132 971 B1**
(45) Veröffentlichungstag und Bekanntmachung des Hinweises auf die Patenterteilung: **22.12.2010**
(21) Anmeldenummer: 09007527.6
(22) Anmeldetag: 08.06.2009
(51) Int. Cl.: A01B 79/00

(54) **Bordcomputer**
On-board computer
Ordinateur de bord

(30) Priorität: 12.06.2008 DE 102008028220
(43) Veröffentlichungstag der Anmeldung: 16.12.2009
(73) Patentinhaber: Amazonen-Werke H. Dreyer GmbH & Co. KG, 49205 Hasbergen (DE)
(72) Erfinder: Scheufler, Bernd, Dr., 49205 Hasbergen (DE); Resch, Rainer, Dr., 49170 Hagen an TW (DE)

(56) Entgegenhaltungen:
- EP-A- 0 201 658
- EP-A- 0 458 107
- DE-A1- 3 043 602
- DE-A1- 3 500 885
- DE-A1- 10 120 173

## Beschreibung

Die Erfindung betrifft ein Bordcomputersystem gemäß des Oberbegriffes des Patentanspruches 1.

Ein derartiges Computersystem ist beispielsweise durch die EP 02 01 658 B1 bekannt. Dieses Bordcomputersystem besteht aus einem Schlepperrechner und einem Geräterechner, die während des Arbeitseinsatzes des jeweils zugeordneten Schleppers und Gerätes miteinander kommunizieren, und so dass das an dem Schlepper angeordnete Gerät entsprechend einstellen ist. Das bekannte Bordcomputersystem ist so ausgestaltet, dass in dem Schlepperrechner verschiedene Rechner und Steuerprogramme für verschiedene an den Schlepperrechner bzw. Schlepper anzukoppelnde mit Geräterechner ausgerüstete Geräte eingespeichert sind. Wenn der Schlepper mit einem entsprechenden Gerät gekoppelt ist, kommunizieren die jeweils dem Schlepper und dem Gerät zugeordneten Rechner miteinander, wobei aufgrund der übermittelten Signale der Schlepperrechner erkennt, welches Gerät an den Schlepper angekoppelt ist.

Der reibungslose Datenaustausch zwischen dem Schlepperrechner und dem Geräterechner funktioniert beim bekannten Bordcomputersystem nur, wenn in dem Schlepperrechner bereits die erforderlichen Rechner- und Steuerprogramme eingespeichert sind.

Falls nun in dem Schlepperrechner nicht das erforderliche Rechner- bzw. Steuerprogramm eingespeichert ist, welches erforderlich ist, um mit dem den an dem Schlepper angekoppelten Gerät zugeordneten Geräterechner zu kommunizieren, kann über das Bordcomputersystem das Gerät nicht eingestellt werden.

Der Erfindung liegt die Aufgabe zugrunde, das Bordcomputersystem so auszugestalten, dass in einfacher Weise in jedem Fall eine Kommunikation der zum Einsatz kommenden Rechner des Bordcomputersystems und eine fehlerfrei Einstellung des zugeordneten Gerätes über das Bordcomputersystem möglich wird, damit eine einwandfreie Kommunikation der Systeme des Bordcomputersystems sichergestellt ist.

Diese Aufgabe wird in erfindungsgemäßer Weise durch die kennzeichnenden Merkmale des Anspruches 1 gelöst. Infolge dieser Maßnahmen werden bei einer landwirtschaftlichen Gerätekombination, die aus einem Traktor und zumindest einem daran angekoppelten Gerät besteht, der Schlepperrechner und der zumindest eine Geräterechner über ein Bussystem, das bevorzugt auf ISO-BUS-Basis arbeitet, zum Austausch von Steuerungsbefehlen und Informationen miteinander gekoppelt. Hierbei kommunizieren die Systeme über ein gemeinsames standardisiertes Protokoll. Hierbei sind alle Systemelemente mit Steuergeräten ausgestattet, die für die Kompatibilität jeweils einen speziellen Softwarestand benötigen, um miteinander fehlerfrei kommunizieren zu können. Um dieses sicherzustellen, ist ein drahtloses Kommunikationssystem vorhanden, das die Kommunikation mit einem oder mehreren Downloadservern erlaubt. Hierbei wird von dem System automatisch der jeweils passende Softwarestand heruntergeladen und in den jeweiligen Speichern der Systemelemente gespeichert. Hierbei werden die notwendigen Softwarestände von zumindest einem zentralen Server, der die Komplimentätsdaten gespeichert hat, zur Verfügung gestellt.

Hierdurch ist eine einwandfreie Kommunikation sichergestellt. Das System kann hierbei so ausgestaltet sein, dass zum Start des Update- und Downloadvorganges sowie zur endgültigen Aktivierung der aktualisierten Software eine manuelle Sicherheitsfreigabe erfolgen muss.

Eine einfache Ausgestaltung des Bordcomputersystems lässt sich dadurch realisieren, dass der Schlepperrechner und der Geräterechner mit einem Bussystem zum Austausch von Datensätzen, wie Steuerungsbefehlen und Informationen gekoppelt sind.

Damit die Rechner in gewünschter Weise fehlerfrei miteinander kommunizieren können, ist vorgesehen, dass die Rechner über ein gemeinsames Protokoll kommunizieren.

Eine einfache Bereitstellung der erforderlichen Softwareversionen, die verfügbar sind, lässt sich dadurch erreichen, dass die Softwareversionen auf zumindest einem Zentralserver, auf dem die Kompatibilitätsdaten gespeichert sind, bereitstellbar sind.

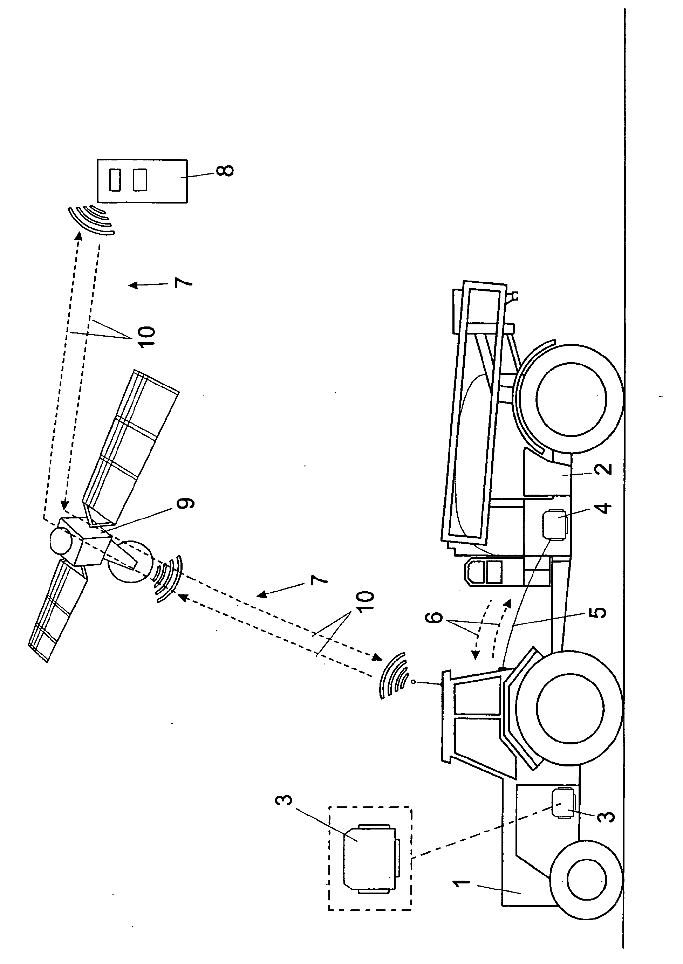

Weitere Einzelheiten der Erfindung sind der Beispielsbeschreibung und der Zeichnung zu entnehmen. Die Zeichnung zeigt den Datenaustausch eines Bordcomputersystems für landwirtschaftliche Maschinenkombinationen in Prinzipdarstellung.

Die in der Zeichnung dargestellte landwirtschaftliche Maschinenkombination besteht aus dem Ackerschlepper 1 und dem angekuppelten Arbeitsgerät, welches im Ausführungsbeispiel als gezogene Feldspritze 2 ausgebildet ist. Derartige landwirtschaftliche Arbeitsgeräte können auch Sämaschinen, Bodenbearbeitungsgeräte, Düngerstreuer, Erntemaschinen etc. sein.

Der Ackerschlepper 1 weist den Schlepperrechner 3 auf, während das angekuppelte Arbeitsgerät 2 den Geräterechner 4 aufweist. Der Schlepperrechner 3 und der Geräterechner 4 sind Bestandteil des Bordcomputersystems und über die als Kabelverbindung 5 ausgebildete Datenkomunikationsverbindungseinrichtung miteinander verbunden, so dass sie in kommunizierender Weise Daten austauschen können. Diese Datenkommunikationsverindungseinrichtung 5 zwischen dem Geräterechner 4 und dem Schlepperrechner 3 kann auch als drahtlose Datenübertragungseinrichtung, beispielsweise Bluetooth-Einrichtung ausgestaltet sein. Wenn mehrere Arbeitsgeräte an dem Ackerschlepper 1 angeordnet sind, kann jedem Arbeitsgerät ein eigener Geräterechner zugeordnet sein, der ebenfalls Bestandteil des Bordcomputersystems ist und über eine Datenübertragungseinrichtung mit dem Schlepperrechner 3 und/oder den übrigen Geräterechnern in Verbindung steht.

Wenn das Anhängegerät 4 an den Schlepper 1 angekuppelt ist, wird der Geräterechner 4 mit dem Schlepperrechner 3 über die als Kabel 5 ausgebildete Datenkommunikationsverbindungseinrichtung miteinander verbunden. Nach dem Verbinden der Rechner 3 und 4 miteinander werden diese eingeschaltet, und über die Datenkommunikationseinrichtung 5 tauschen die Rechner 3 und 4 über ein standardisiertes Grundprotokoll in kommunizierender Weise Daten aus, wie die Pfeile 6 dies symbolisch zeigen. Über dieses Grundprotokoll wird erkannt, welches Arbeitsgerät 2 an dem Ackerschlepper 1 angekuppelt ist. Weiterhin wird in automatischer Weise überprüft, ob der Schlepperrechner mit dem Geräterechner und umgekehrt miteinander kommunizieren können und hierzu die erforderlichen Software-Versionen für den optimalen Betrieb des verwendeten Ackerschleppers 1 mit dem angekuppelten Arbeitsgerät 2 in den verwendeten Schlepper- 3 und Geräterechnern 4 enthalten ist. Hierzu wird über eine drahtlose Datenverbindung 7 die Kompatibilitätsinformation durch Abfragen von einem Zentralserver 8, auf dem die Kompatibilitätsdaten gespeichert sind, abgefragt. Diese Datenverbindung 7 kann beispielsweise unter Zwischenschaltung von Satteliten 9 oder Nutzung von Telekommunikationseinrichtung erfolgen. Dieser Zentralserver 8 wird von dem Schlepper-, dem Geräte- und/oder den Rechnerherstellern zur Verfügung gestellt.

Wird die dieser Kompatibilitätsüberprüfung festgestellt, dass die auf dem Schlepper- 3 und Geräterechner 4 vorhandenen Softwarestände für den optimalen Betrieb vorhanden sind, wir die Kompatibilitätsüberprüfung abgeschlossen und das

Bordcomputersystem der landwirtschaftlichen Maschinenkombination ist einsatzbereit.

Wenn bei der Kompatibilitätsüberprüfung festgestellt wird, dass nicht die erforderlichen Softwareversionen auf dem Schlepper- 3 und/oder Geräterechner 4 vorhanden sind, wird über die drahtlose Datenverbindung 7 die Kompatibilitätsinformation von dem Zentralserver 8 ermittelt. In einem automatischen drahtlosen Download, Update oder Installationsvorgang wird über die drahtlose Datenverbindung, die durch die Pfeile 10 symbolisch dargestellt ist, von dem externen Zentralserver 8 die in dem Kompatibilitätsvorgang ermittelte erforderlichen Softwareversionen entsprechend des Ermittlungsergebnisses auf den Schlepperrechner 3 und/oder Geräterechner 4 installiert und betriebsbereit gestellt. Somit ist das Bordcomputersystem mittels der in einem Installationsvorgang oder Updatevorgang bereitgestellten Software in systembedingter Weise betriebsbereit.

Der Schlepperrechner 3 und der Geräterechner 4 sind mit einem BUS-System zum Austausch von Datensätzen, wie Steuerungsbefehlen und Informationen miteinander gekoppelt. Die Rechner 3 und 4 kommunizieren über ein gemeinsames Protokoll miteinander.

Um sicherzustellen, dass nur zugelassene und richtige Software auf dem Geräte- 3 und Schlepperrechner 4 installiert wird, muss der Installationsvorgang vor der automatischen Installation manuell in entsprechender Weise freigegeben werden.

Das neue landwirtschaftliche BUS-System lässt sich kurz wie folgt umschreiben. Die landwirtschaftliche Gerätekombination besteht auf Traktor 1 und zumindest einem Gerät 2, die mit einem BUS-System, vorzugsweise dem ISO-BUS, zum Austausch von Steuerungsbefehlen und Informationen miteinander gekoppelt sind. Die Systeme des Schleppers und des Gerätes kommunizieren über ein gemeinsames Protokoll. Alle Systemelemente der Gerätekombination sind mit einem elektronischen Steuergerät oder Bordcomputer 3, 4 ausgestattet, wobei die Systemelemente für die Kompatibilität 7, 10 jeweils einen speziellen Softwarestand benötigen, um miteinander kommunizieren zu können. Es ist ein drahtloses Kommunikationssystem vorhanden, welches die Kommunikation mit einem oder mehreren externen Download-Servern 8 erlaubt. Von diesen Download-Servern 8 kann sich das Bordcomputersystem 3, 4automatisch die jeweils passenden Softwarestände herunterladen. Diese notwenigen Stände werden von dem Zentralrechner 8 über den die Kompatibilitätsdaten bereitgestellt werden, übermittelt, so dass eine einwandfreie Kommunikation der Systemkomponenten 3, 4 des Bordcomputersystems sichergestellt werden kann.

## Patentansprüche

1. Bordcomputersystem für landwirtschaftliche Maschinenkombination, bestehend aus einem Ackerschlepper mit einem Schlepperrechner und zumindest einem mit dem Ackerschlepper gekuppeltem Arbeitsgerät, wie Sämaschine, Feldspritze, Bodenbearbeitungsgerät, Düngerstreuer, Erntemaschine etc., mit einem Geräterechner, wobei der Schlepperrechner und der zumindest eine Geräterechner Bestandteil des Bordcomputersystems sind und über zumindest eine Datenkommunikationsverbindungseinrichtung miteinander in kommunizierender Weise Daten zumindest teilweise über zumindest ein standardisiertes Grundprotokoll austauschen und über dieses Grundprotokoll zumindest erkannt wird, welches Arbeitsgerät an den Ackerschlepper angekuppelt ist, **dadurch gekennzeichnet, dass** in zumindest einem Speicher der Rechner (3,4) des Bordcomputersystems ein Programm zur Ermittlung der erforderlichen Softwareversionen für den optimalen Betrieb des verwendeten Ackerschleppers (1) mit dem zumindest einem angekuppelten Arbeitsgerät (2) und der zugeordneten und verwendeten Schlepper- (3) und Geräterechner (4) enthalten ist und über eine drahtlose Datenverbindung (7,10) von einem als Zentralserver (8) ausgebildeten externen Server, auf dem die Kompatibilitäts daten gespeichert sind, die Kompatibilitätsinformationen ermittelbar sind, dass nach Ermittlung der erforderlichen Softwareversion, wenn die erforderliche Softwareversion nicht auf dem Schlepper- und/oder Geräterechner (3, 4) vorhanden ist, diese in der zumindest einen Speichereinrichtung des Bordcomputersystems (3,4) in einem automatischen drahtlosen Download-, Update- und/oder Installationsvorgang, von dem zumindest einen externen Server (8) installierbar und/oder betriebsbereit bereitstellbar ist, und dass mittels der in dem Installationsvorgang oder Updatevorgang bereitgestellten Software das Bordcomputersystem (3,4) in systembedingter Weise betreibbar ist.

2. Bordcomputersystem nach Anspruch 1, **dadurch gekennzeichnet, dass** der Schlepperrechner (3) und der Geräterechner (4) mit einem Bussystem zum Austausch von Datensätzen, wie Steuerungsbefehlen und Informationen gekoppelt sind.

3. Bordcomputersystem nach Anspruch 1, **dadurch gekennzeichnet, dass** die Rechner (3,4) über ein gemeinsames Protokoll kommunizieren.

4. Bordcomputersystem nach einem oder mehreren der vorstehenden Ansprüche, **dadurch gekennzeichnet, dass** die Softwareversionen auf dem zumindest einen Zentralserver (8), auf dem die Kompatibilitätsdaten gespeichert sind, bereitstellbar sind.

## Claims

1. On-board computer system for agricultural machine combinations, comprising a tractor having a tractor computer and at least one implement coupled to the tractor, such as a sower, field sprayer, cultivator, fertilizer spreader, harvester, etc., having an implement computer, wherein the tractor computer and the at least one implement computer are part of the on-board computer system and communicatively interchange data with one another via at least one data communication link device at least in part using at least one standardized basic protocol and this basic protocol is used at least to recognize which implement is coupled to the tractor, **characterized in that** at least one memory of the computers (3, 4) in the on-board computer system contains a program for ascertaining the required software versions for optimum operation of the tractor (1) used with the at least one coupled implement (2) and the associated tractor (3) and implement (4) computers used, and a wireless data link (7, 10) can be used by an external server which is in the form of a central server (8) and which stores the compatibility data, to ascertain the compatibility information, **in that** following ascertainment of the required software version, if the required software version is not present on the tractor and/or implement computer (3, 4), it can be installed and/or provided in a standby state by the at least one external server (8) in the at least one memory device of the on-board computer system (3, 4) in an automatic wireless download, update and/or installation operation, and **in that** the software provided in the installation operation or update operation can be used to operate the on-board computer system (3, 4) in a manner determined by the system.

2. On-board computer system according to Claim 1, **characterized in that** the tractor computer (3) and the implement computer (4) are coupled to a bus system for the purpose of interchanging data records, such as control commands and information.

3. On-board computer system according to Claim 1, **characterized in that** the computers (3, 4) communicate using a common protocol.

4. On-board computer system according to one or more of the preceding claims, **characterized in that** the software versions can be provided on the at least one central server (8) which stores the compatibility data.

## Revendications

1. Système d'ordinateur de bord pour une combinaison de machines agricoles composée d'un tracteur agricole équipé d'un ordinateur de tracteur et d'au moins un appareil couplé au tracteur tel qu'un semoir, un pulvérisateur agricole, un appareil de travail du sol, un épandeur d'engrais, une machine de récolte, etc..., appareil équipé d'un calculateur d'appareil,
le calculateur de tracteur et au moins un calculateur d'appareil font partie du système d'ordinateur embarqué et sont reliés par au moins une installation de communication de données de façon à échanger des données, au moins en partie par au moins un protocole de base standardisé, ce protocole de base permettant de reconnaître au moins l'appareil associé au tracteur agricole,
système **caractérisé en ce que**
- au moins une mémoire du calculateur (3, 4) du système d'ordinateur embarqué, contient un programme pour déterminer les versions nécessaires de programme pour le fonctionnement optimum du tracteur agricole (1) utilisé avec au moins un appareil couplé (2), et ce programme est contenu dans le calculateur de tracteur (3) et le calculateur d'appareil (4) utilisés en association, et par une liaison de données sans fil (7, 10) un serveur central (8) sur lequel sont enregistrées les données de compatibilité, constitue un serveur central, fournissant des informations de compatibilité,
- après avoir déterminé la version de programme nécessaire, si cette version de programme nécessaire ne se trouve pas dans le calculateur de tracteur et/ou le calculateur d'appareil (3, 4) cette version est installée et/ou est fournie prête à fonctionner dans au moins une installation de mémoire du système d'ordinateur embarqué (3, 4) par une opération automatique sans fil, de téléchargement, de mise à jour et d'installation par au moins un serveur externe (8) et
- le système d'ordinateur embarqué (3, 4) peut fonctionner conformément à ce qu'exige le système par le programme fourni par l'opération d'installation ou de mise à jour.

2. Système d'ordinateur de bord selon la revendication 1,
**caractérisé en ce que**
le calculateur de tracteur (3) et le calculateur d'appareil (4) sont couplés par un système de bus pour échanger des jeux de données tels que des commandes et des informations.

3. Système d'ordinateur de bord selon la revendication 1,
**caractérisé en ce que**
les calculateurs (3, 4) communiquent par un protocole commun.

4. Système d'ordinateur de bord selon une ou plusieurs des revendications précédentes,
**caractérisé en ce que**
les versions de programme sont disponibles sur au moins un serveur central (8) dans lequel sont enregistrées les données de compatibilité.
